Europäisches Patentamt

European Patent Office

Office européen des brevets

(19)

(11) Veröffentlichungsnummer : **0 201 552**
**B1**

(12)

# EUROPÄISCHE PATENTSCHRIFT

(45) Veröffentlichungstag der Patentschrift :
24.01.90

(21) Anmeldenummer : 85905629.3

(22) Anmeldetag : 12.11.85

(86) Internationale Anmeldenummer :
PCT/EP 85/00616

(87) Internationale Veröffentlichungsnummer :
WO/8603030 (22.05.86 Gazette 86/11)

(51) Int. Cl.$^5$ : **G 03 B 23/02**

(54) **VORRICHTUNG ZUM UMSCHICHTEN EINES BILDERSTAPELS.**

(30) Priorität : 13.11.84 DE 3441463

(43) Veröffentlichungstag der Anmeldung :
20.11.86 Patentblatt 86/47

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
FR–A– 2 454 112
Hildebrand, "Feinmechanische Bauelemente", Mün-
chen/Wien 1978, Seiten 593-595

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Röhl, Wolf Horst, Dipl.-Phys., Dr. et al
Dipl.-Ing. K. Sparing Dipl.-Phys. Dr. W.H. Röhl Rethelstrasse 123
D-4000 Düsseldorf 1 (DE)

## Beschreibung

Die Erfindung betrifft eine Vorrichtung zum zyklischen Umschichten eines Stapels rechteckiger oder quadratischer Bilder oder einen sogenannten Bildwechsler.

Bildwechsler sind aus den US-Patentschriften 4238898, 4238899, 4241528, 4241529, 4245417, 5259802 und 4376348 bekannt. Ihnen allen liegt das Prinzip zugrunde, daß ein Stapel von Bildern, insbesondere Fotoabzüge, von zwei relativ zueinander verschieblichen Rahmenteilen aufgenommen ist, von denen eines ein Sichtfenster aufweist. Jeweils bei einem vollständigen Bewegungszyklus der Rahmenteile (etwa in Form eines Gehäuses und eines Schiebers) — d. h. vollständiges Auseinanderziehen und vollständiges Wiederzusammenschieben — wird ein Bild an einem Stapelende abgenommen und am anderen Stapelende wieder zugefügt. Hierfür weisen die Bildwechsler die folgenden Komponenten auf :

Eine Trenneinrichtung, die ein Einzelbild vom Stapel löst ;

eine Zufuhreinrichtung, die der Trenneinrichtung Bilder zuführt ;

eine Halteeinrichtung, die das vom Stapel abgetrennte Einzelbild in einem der Rahmenteile hält, während der Reststapel im anderen Rahmenteil gehalten wird ;

eine Leiteinrichtung, die das abgetrennte Einzelbild so führt, daß es auf die andere Seite des Reststapels gelangt.

Wenn man einen derartigen Bildwechsler für Fotoabzüge verwendet, so ergeben sich Probleme aufgrund der spezifischen Eigenschaften der Bilder, diese sind sehr dünn, in der Größenordnung von 0,25 mm. Sie bestehen aus einem Schichtaufbau aus Papier und Kunststoff. Dies hat zur Folge, daß sie sich bei wechselnden Umgebungsbedingungen unvorhersehbar verwerfen und wölben. Außerdem neigen sie aufgrund von Feuchtigkeit oder statischer Aufladung zum Aneinanderhaften.

Beim Wechselvorgang, dem zyklischen Umschichten des Bilderstapels, können, wenn der Wechselvorgang aus irgendeinem Grund unterbrochen wird und der Benutzer einen teilweise herausgezogenen Schieber wieder in das Gehäuse einschiebt, vier kritische Situationen auftreten :

Die erste kritische Situation tritt auf, wenn die in Bewegungsrichtung hintere Kante des umzuschichtenden Bildes gerade im Begriff ist, aus einem Abtrenndurchlaß zum Separieren des Bildes vom Reststapel auszutreten. Die Leiteinrichtung hat dann noch nicht begonnen, diese Kante quer zum Separatorsteg zu verlagern, aber ein Teil der Kante ist schon hinter diesem, während ein anderer noch darunter liegt (wenn etwa die betreffende Bildkante nicht exakt parallel zum Separatorsteg verläuft). Dies ist kurz vor der äußeren Endstellung. Wird dann der Schieber, anstatt ihn ganz herauszuziehen, wieder eingestoßen, stößt die Bildkante auf den Separatorsteg und wird gestaucht, so daß das Bild weder zurück unter, noch zurück über den Stapel geführt werden kann.

Die zweite kritische Situation tritt kurz vor Erreichen der inneren Endstellung auf. Die in Bewegungsrichtung hintere Kante des Bildes steckt dann noch im Rückführdurchlaß, während bereits der nächste Wechselvorgang vorbereitet wird. Auch hier besteht die Möglichkeit, daß das Bild gestaucht wird.

Die dritte kritische Situation ergibt sich dann, wenn bei der ersten Phase, dem Herausziehen des Schiebers, das abgetrennte Bild noch etwas im Abtrenndurchlaß steht, jedoch bereits das im Stapel nächstfolgende Bild freigegeben ist und mit seiner führenden Kante vor dem Einlaß des Abtrenndurchlasses « wartet ». Werden dann die Rahmenteile zusammengeschoben, stoßen die einander gegenüberstehenden Kanten der beiden Bilder aufeinander und führen zu einem Stauchen.

Die vierte kritische Situation ergibt sich dann, wenn während der zweiten Phase, dem Einstoßen des Schiebers, dieser Vorgang unterbrochen und der Schieber mehrmals um kurze Hübe hin- und herbewegt wird. Dann besteht die Gefahr, daß die hintere, « geschobene » Kante des Einzelbildes sich von dem « schiebenden » Bauteil losschaukelt, womit der Bildwechsler funktionsuntüchtig wird.

Aufgabe der Erfindung ist es daher, eine Vorrichtung zum zyklischen Umschichten eines Bilderstapels zu schaffen, bei der eine Stauchgefahr für die Bilder des Stapels, wie oben beschrieben, ausgeschaltet wird, so daß ein störungsfreies Bildwechseln gewährleistet ist.

Man könnte mit erheblichem konstruktiven Aufwand versuchen, jedes einzelne der oben geschilderten Probleme für sich zu lösen. Abgesehen davon, daß solche hypothetischen Lösungen nicht bekannt sind, wären die aufzuwendenden Kosten für das Endprodukt — ein Massenerzeugnis — prohibitiv.

Die Erfindung geht einen anderen, überraschend einfachen Weg. Es wird nämlich durch eine Freilaufeinrichtung dafür gesorgt, daß zumindest in den oben genannten kritischen Relativlagen der Rahmenteile eine (vorzeitige) Bewegungsumkehr gesperrt wird.

Solche Freilaufeinrichtungen sind auf zahlreichen Gebieten der Technik bekannt. Zu verweisen ist beispielsweise auf Hildebrand, « Feinmechanische Bauelemente », München/Wien 1978, Seiten 593-595, wo Beispiele für sogenannte « Richtgesperre », eine andere Bezeichnung für Freilaufeinrichtungen der hier in Rede stehenden Art, beschrieben und dargestellt sind.

Ausführungsformen der Erfindung sind in den beigefügten Zeichnungen dargestellt und werden nachfolgend im Detail erläutert ; wichtige Einzelheiten dieser Ausführungsformen lassen sich dieser Beschreibung und den Ansprüchen zu entnehmen.

Die Erfindung wird nachstehend anhand der in den beigefügten Abbildungen dargestellten Ausführungsbeispiele näher erläutert.

Fig. 1 zeigt in Draufsicht und teilweise aufgeschnitten einen Bildwechsler mit teilweise ausgezogenem Schieber.

Fig. 2 bis 10 zeigen Schnitte und Einzelheiten des Bildwechslers von Fig. 1.

Fig. 11 und 12 zeigen eine weitere Ausführungsform eine Fehlbedienung des Bildwechslers verhindernden Einrichtung.

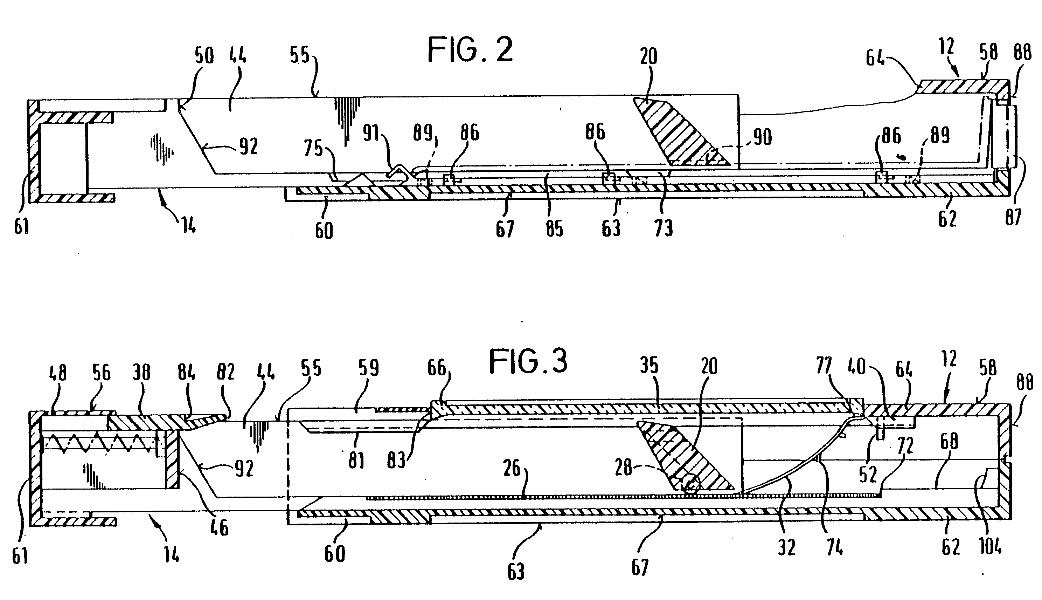

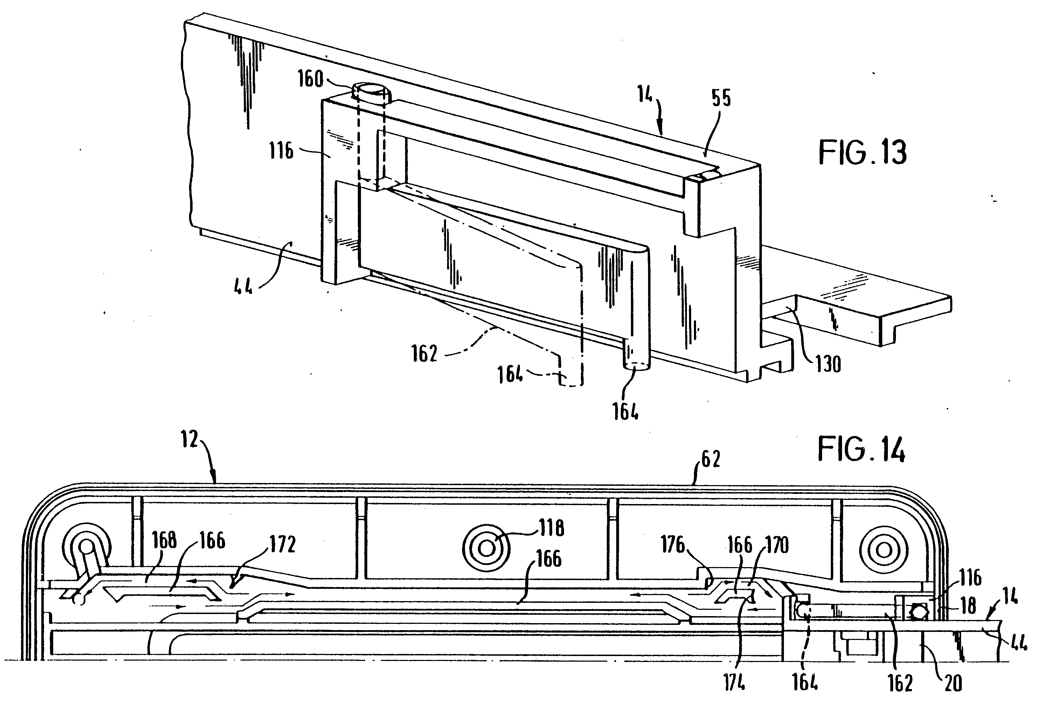

Fig. 3 und 14 zeigen eine zusätzliche Ausführungsform einer eine Fehlbedienung des Bildwechslers verhindernden Einrichtung.

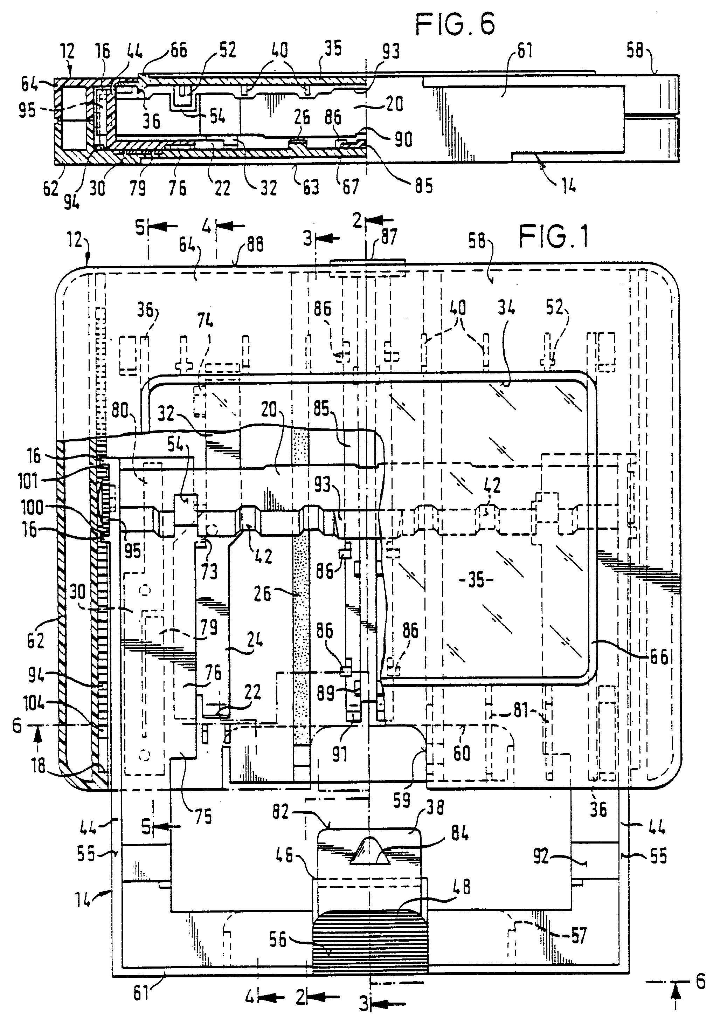

Bei dem in den Fig. 1 bis 10 dargestellten Ausführungsbeispiel ist ein erstes Rahmenteil als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gehalten wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Bilderstapel (in Fig. 1 nicht gezeigt) gegen ein Sichtfenster, dessen innere Kontur mit 34 bezeichnet ist. Das dann im Stapel oberste Bild, im Bestimmungsfalle ein Fotoabzug, soll dann möglichst plan liegen ; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40 ; da er aber weiter zu Fenster 35 vorsteht, das dem Niveau dieser Rippen entspricht, weist er für den Vorbeigang derselben Einschnitte 42 auf.

Die Abstützung der Kanten des Stapels erfolgt seitlich (d. h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte ; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

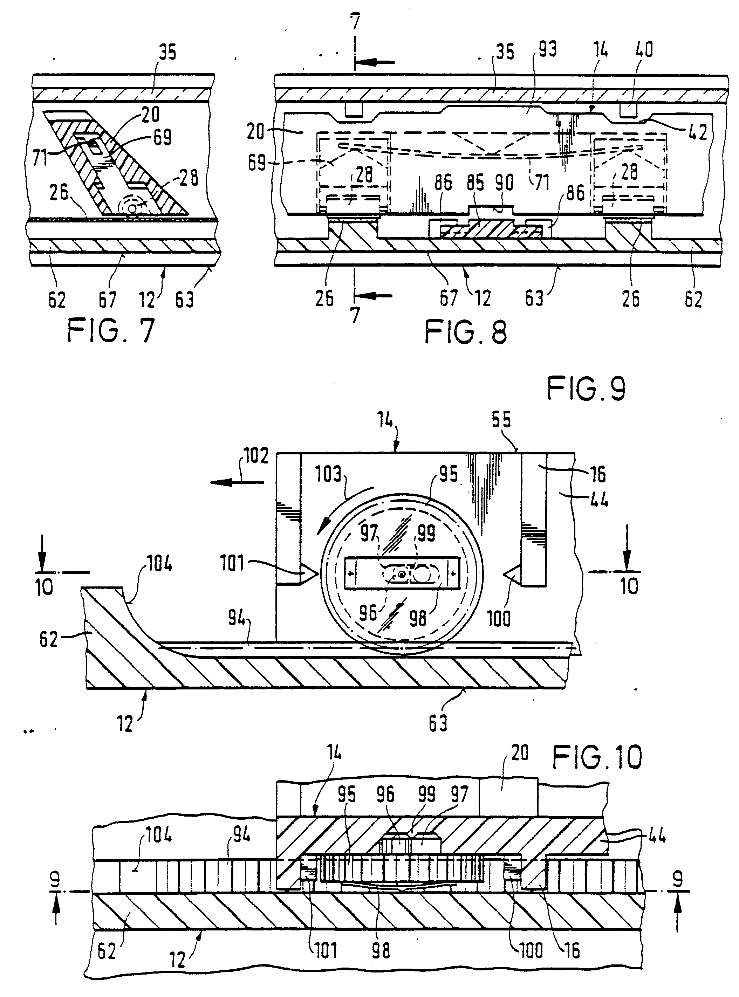

Das Gehäuse ist aus drei Teilen zusammengesetzt : Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmen liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts « wandern », in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

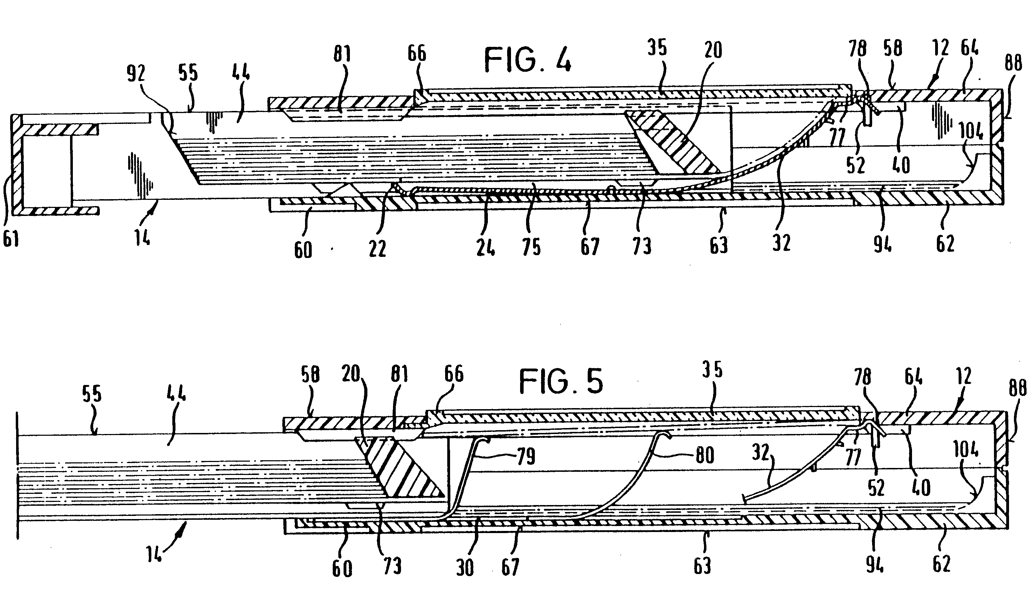

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung : Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Arm en 79 und rückseitigen Arm en 80, die — wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen ; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäuses durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Unterhalb der Anschlagflächen 50 weist deshalb die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als « Fortsetzung » der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug geben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

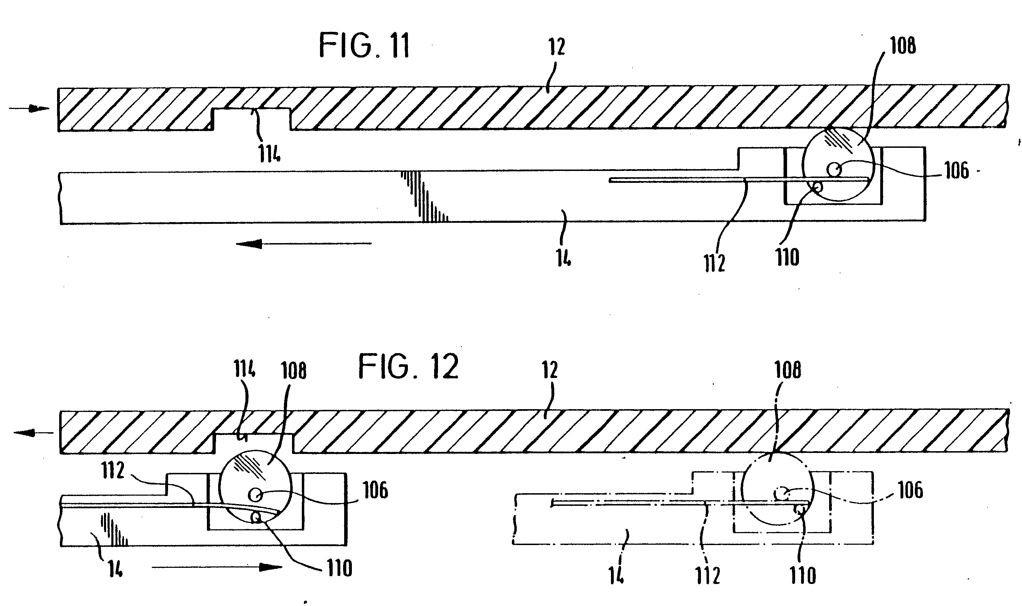

Die Fig. 11 und 12 zeigen eine Variante der Sperreinrichtung nach Fig. 9 und 10. Von den Rahmenteilen sind jeweils nur einander gegenüberstehende Abschnitte 12 bzw. 14 angedeutet. In einem der Rahmenteile, hier Rahmenteil 14, ist um einen Zapfen 106, der jedoch exzentrisch sitzt, eine Klemmrolle 108 drehbar. Sie trägt gegenüber ihrer größten Ausladung einen Stift 110, über den eine am Rahmenteil 14 befestigte Blattfeder 112 greift. Bei Bewegung in Pfeilrichtung in Fig. 11 kann die Klemmrolle ausweichen, in Gegenrichtung jedoch verklemmt sie die beiden Rahmenteile. In den Endlagen der Rahmenteile trifft die Klemmrolle auf eine Ausnehmung 114 im jeweils anderen Rahmenteil und kann deshalb, bei Schubrichtungsumkehr, frei um etwa 90° schwenken, bis der Stift 110 wieder an der Feder 112 anliegt.

Die oben beschriebenen beiden Sperrvorrichtungen wirken nach Art eines Freilaufs, das heißt, sie schalten jeweils erst in den Endstellungen beider Rahmenteile relativ zueinander um. Es kann aber vorkommen, daß ein Benutzer eine Fehlbedienung wieder rückgängig machen möchte, etwa weil ein Stapel Fotoabzüge beim Einlegen sich verlagert hat. Dann ist es doch erwünscht, wenigstens aus gewissen Positionen heraus ungesperrt in beiden Richtungen die Rahmenteile relativ zueinander verlagern zu können. Deshalb ist im nachstehend beschriebenen bevorzugten Ausführungsbeispiel der Fig. 13, 14 eine andere Bauart der Sperrvorrichtung vorgesehen.

Bei diesem Ausführungsbeispiel, bei dem das Sperren nur in den kritischen Phasen des Wechselzyklus wirken, ist in einem Lagerauge 116 an der Außenseite eines Holm 44 des Schiebers 14 im Bereich des Separatorsteges 20 um einen sich senkrecht zur Längsrichtung des Holmes 44 erstreckenden Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 14 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Der Zapfen 160 sitzt mit hinreichender Reibung im Lagerauge, so daß die Steuerklinke zwar den Führungsstegen ohne merkbare Behinderung folgen, nicht aber frei pendeln kann.

Diese Freilaufeinrichtung kann ebenso wie die beiden vorhergehend beschriebenen zusätzlich spiegelsymmetrisch auch noch auf der anderen Seite des Gehäuses 12 zwischen diesem und dem Schieber 14 angeordnet sein, wobei dann beide Freilaufeinrichtungen synchron arbeiten. Gegebenenfalls kann eine manuelle Inaktivierung der Freilaufeinrichtung(en) vorgesehen sein.

## Patentansprüche

1. Vorrichtung zum zyklischen Umschichten eines Stapels rechteckiger oder quadratischer Bilder mit einem ersten (12) und einem zweiten Rahmenteil (14), die parallel zur Hauptebene des von beiden umfaßten Bilderstapels relativ zueinander hinundherbeweglich sind, dadurch gekennzeichnet, daß die beiden Rahmenteile über eine Freilaufeinrichtung (94-104 ; 106-114 ; 160-174) gekoppelt sind, welche mindestens in Teilbereichen der Rahmenteilbewegung diese bei einem Wechsel der Bewegungsrichtung blockiert.

2. Vorrichtung nach Anspruch 1, bei der die Rahmenteile zwischen einer zusammengeschobenen inneren Endlage und einer auseinandergezogenen äußeren Endlage, die durch Anschläge festgelegt sind, beweglich sind, dadurch gekennzeichnet, daß die Freilaufeinrichtung Mittel (96-99, 104; 114) umfaßt, die in den Endlagen die Umkehr der Bewegungsrichtung freigeben.

3. Vorrichtung nach Anspruch 1 oder 2, dadurch gekennzeichnet, daß die Freilaufeinrichtung in den beiden Umkehrbereichen vor Erreichen der Endstellungen den Wechsel der Bewegungsrichtung blockiert.

4. Vorrichtung nach einem der Ansprüche 1-3, dadurch gekennzeichnet, daß in einem der Rahmenteile (14) ein Separatorsteg (20) vorgesehen ist, der einen Abtrenndurchlaß für ein Bild und einen Rückführdurchlaß für das Bild begrenzt, und daß die Freilaufeinrichtung mindestens in dem Bereich des Auszugswegs bei Richtungswechsel blockiert, in welchem die in Auszugsrichtung hintere Kante dieses Bildes den Abtrenndurchlaß vollständig passiert.

5. Vorrichtung nach einem der Ansprüche 1-4, dadurch gekennzeichnet, daß in einem der Rahmenteile (14) ein Separatorsteg (20) angeordnet ist, der einen Abtrenndurchlaß für ein Bild und einen Rückführdurchlaß für das Bild begrenzt, und daß die Freilaufeinrichtung mindestens in dem Bereich des Einschubweges bei Richtungswechsel blockiert, in welchem die in Einschubrichtung hintere Kante dieses Bildes den Rückführdurchlaß vollständig passiert.

6. Vorrichtung nach einem der vorangehenden Ansprüche, dadurch gekennzeichnet, daß die Freilaufeinrichtung jeglichen Richtungswechsel der Rahmenteilbewegung zwischen einer inneren und einer äußeren Endlage und umgekehrt sperrt.

7. Vorrichtung nach einem der Ansprüche 1-5, dadurch gekennzeichnet, daß die Freilaufeinrichtung nur in ausgewählten Bereichen der Relativpositionen der Rahmenteile einen Bewegungsrichtungswechsel sperrt, in den übrigen Bereichen jedoch freigibt.

8. Vorrichtung nach einem der vorangehenden Ansprüche, gekennzeichnet durch zwei spiegelsymmetrische synchron arbeitende Freilaufeinrichtungen beidseits einer in Rahmenteilbewegungsrichtung verlaufenden Mittelebene.

9. Vorrichtung nach einem der vorangehenden Ansprüche, dadurch gekennzeichnet, daß die Freilaufeinrichtung in einem Bereich zwischen zwei benachbarten Wandungen der beiden Rahmenteile angeordnet ist.

10. Vorrichtung nach Anspruch 9, dadurch gekennzeichnet, daß eines der Rahmenteile (14) als Schieber mit parallel zur Bewegungsrichtung verlaufenden Holmen (44), zwischen denen der Bilderstapel liegt, ausgebildet ist, und daß die Freilaufeinrichtung außerhalb des von den Holmen begrenzten Bereichs angeordnet ist.

11. Vorrichtung nach Anspruch 10, dadurch gekennzeichnet, daß die Freilaufeinrichtung seitlich neben den Holmen angeordnet ist.

12. Vorrichtung nach einem der vorangehenden Ansprüche, dadurch gekennzeichnet, daß die Freilaufeinrichtung mindestens ein Sperrglied (95; 108; 162/164) an einem der Rahmenteile und eine Sperrbahn (94; 168/170) am andern Rahmenteil umfaßt.

13. Vorrichtung nach Anspruch 12, dadurch gekennzeichnet, daß Sperrglied und Sperrbahn über den gesamten Bewegungshub der Rahmenteile in Wirkverbindung stehen.

14. Vorrichtung nach Anspruch 12 oder 13, dadurch gekennzeichnet, daß eines der Rahmenteile als Schieber (14) ausgebildet ist, der aus dem als Gehäuse (12) ausgebildeten anderen Rahmenteil herausziehbar und in dieses wieder einschiebbar ist, dadurch gekennzeichnet, daß das Sperrglied an dem Schieber nahe dessen gehäuseinneren Ende angeordnet ist.

15. Vorrichtung nach einem der Ansprüche 12-14, soweit auf Ansprüche 1-5 rückbezogen, dadurch gekennzeichnet, daß mit einem der Rahmenteile (14) ein Steuernocken (162) als Sperrglied verlagerbar verbunden ist, der in einem als Sperrbahn dienenden Kanal (168, 170) des andern Rahmenteils (12) geführt ist.

16. Vorrichtung nach Anspruch 15, dadurch gekennzeichnet, daß der Kanal an ausgewählten Stellen Umkehrschleifen mit Anschlägen (172, 174, 176) aufweist, die eine Umkehr der Bewegungsrichtung verhindern.

17. Vorrichtung nach Anspruch 15 oder 16, dadurch gekennzeichnet, daß der Steuernocken gelenkig mit dem Rahmenteil verbunden ist.

18. Vorrichtung nach Anspruch 17, dadurch gekennzeichnet, daß der Steuernocken um eine sich senkrecht zur Rahmenteilbewegungsrichtung verlaufende Achse schwenkbar und durch den Verlauf des Kanals quer zur Rahmenteilbewegungsrichtung verlagerbar ist.

19. Vorrichtung nach Anspruch 15 oder 16, dadurch gekennzeichnet, daß der Steuernocken als einarmiger Hebel mit einem im Kanal geführten Fortsatz (164) nahe seinem freien Ende ausgebildet ist.

20. Vorrichtung nach einem der Ansprüche 17-19, dadurch gekennzeichnet, daß ein Steuernocken-Schwenklager einstückig an eines der Rahmenteile angeformt ist.

21. Vorrichtung nach Anspruch 18, dadurch gekennzeichnet, daß sich der Hebel von seinem Lager aus entgegen der Auszugsrichtung des Rahmenteils erstreckt, an dem er angelenkt ist.

22. Vorrichtung nach einem der Ansprüche 15-21, dadurch gekennzeichnet, daß der Kanal parallel zur Rahmenteilbewegungsrichtung verlaufende Abschnitte aufweist.

23. Vorrichtung nach Anspruch 22, dadurch gekennzeichnet, daß der Kanal Ablenkkulissen (166) für den Steuernocken enthält.

24. Vorrichtung nach Anspruch 16 und 23, dadurch gekennzeichnet, daß die Anschläge an die Kulissen angeformt sind.

25. Vorrichtung nach einem der Ansprüche 15 bis 24, dadurch gekennzeichnet, daß der Kanal an das andere Rahmenteil angeformt ist.

26. Vorrichtung nach einem der Ansprüche 15-25, dadurch gekennzeichnet, daß der Steuernocken reibungsgebremst verlagerbar ist.

27. Vorrichtung nach Anspruch 6, dadurch gekennzeichnet, daß die Freilaufeinrichtung eine Zahnstange (94) an einem Rahmenteil (12) umfaßt, die mit einem am andern Rahmenteil (14) gelagerten Ritzel (95) kämmt, das in einem Langloch (97) in Bewegungsrichtung der Rahmenteile (12, 14) verschiebbar gelagert ist, daß das Ritzel bei Bewegung der Rahmenteile in zulässiger Richtung durch Reibung an ein Ende des Langlochs, bei Bewegung in unzulässiger Richtung an das andere Ende des Langlochs verlagert wird und dort in Sperreingriff mit einer Spermase (100, 101) gelangt, und daß jeweils ein Anschlag (104) zur Drehrichtungsumkehr des Ritzels in den Endstellungen der beiden Rahmenteile vorgesehen ist.

28. Vorrichtung nach Anspruch 27, dadurch gekennzeichnet, daß das Ritzel (95) mittels einer Feder (98) in Richtung auf das Langloch (97) vorgespannt ist, wobei die Feder an einer Wandung eines der Rahmenteile (12) abgestützt ist.

29. Vorrichtung nach Anspruch 28, dadurch gekennzeichnet, daß die Feder (98) einstückig mit dem Ritzel (95) als sich über den Durchmesser des Ritzels erstreckende gewölbte Blattfeder ausgebildet ist.

30. Vorrichtung nach Anspruch 6, dadurch gekennzeichnet, daß in einer der Wandungen eines der Rahmenteile ein Bremskeilelement (108, 110) angeordnet ist, das zwei mögliche Wirkrichtungen bezüglich einer gegenüberliegenden Wandung des andern Rahmenteils aufweist und dessen Wirkrichtung in den Endstellungen der Rahmenteile umsteuerbar ist.

31. Vorrichtung nach Anspruch 30, dadurch gekennzeichnet, daß das Bremskeilelement als exzentrische Rolle (108) ausgebildet ist, die in Sperrposition vorgespannt gehalten ist.

32. Vorrichtung nach Anspruch 31, dadurch gekennzeichnet, daß die exzentrische Rolle (108) einen Stift (110) gegenüber ihrer größten Ausladung aufweist, der mit einer Feder (112) im Eingriff steht, und daß in den Endstellungen der Rahmenteile Ausnehmungen (114) vorgesehen sind, in die die Rolle ausweichen kann.

## Claims

1. Device for the cyclic rearrangement of a pile of rectangular or square pictures, with a first (12) and a second frame part (14) which can be moved relative to one another back and forth parallel to the principal plane of the pile of pictures held by them, characterized in that the two frame parts are coupled by way of a free-wheel-action device (94-104 ; 106-114 ; 160-174) which, when there is a change in the direction of movement, blocks this at least over partial regions of the movement of the frame parts.

2. Device according to claim 1, in which the frame parts are movable between a pushed-together inner end position and a pulled-apart outer end position, which positions are fixed by stops members, characterized in that the free-wheel-action device comprises means (96-99, 104 ; 114) that free the reversal of the direction of movement in the end positions.

3. Device according to claim 1 or 2, characterized in that the free-wheel-action device blocks the change in the direction of movement in both reversal regions before the end positions are reached.

4. Device according to any one of claims 1 to 3, characterized in that a separator bar (20) is provided in one of the frame parts (14), which bar defines a separating through-gap for a picture and a return through-gap for the picture, and in that if there is a change in direction, the free-wheel-action device performs its blocking function at least over the region of the withdrawal path in which the rear edge, in the direction of withdrawal, of that picture passes completely the separating through-gap.

5. Device according to any one of claims 1 to 4, characterized in that a separator bar (20) is arranged in one of the frame parts (14), which separator bar bounds a separating through-gap for a picture and a return through-gap for the picture, and if there is a change in direction, the free-wheel-action device performs its blocking function at least over the region of the pushing-in path in which the rear edge, in the pushing-in direction, of that picture passes completely the return through-gap.

6. Device according to any one of the preceding claims, characterized in that the free-wheel-action device blocks any change in direction of movement of the frame parts between an inner an and outer end position and vice versa.

7. Device according to any one of claims 1 to 5, characterized in that the free-wheel-action device blocks a change in the direction of movement only in selected ranges of the relative positions of the frame parts, but in the remaining ranges frees movement.

8. Device according to any one of the preceding claims, characterized by two mirror-symmetrical, synchronously operating free-wheel-action devices on both sides of a central plane extending in the direction of movement of the frame parts.

9. Device according to any one of the preceding claims, characterized in that the free-wheel-action device is arranged in a region between two adjacent walls of the two frame parts.

10. Device according to claim 9, characterized in that one of the frame parts (14) is in the form of a slider member with bars (44) extending parallel to the direction of movement, between which bars the pile of pictures is located, and in that the free-wheel-action device is arranged outside the region defined by the bars.

11. Device according to claim 10, characterized in that the free-wheel-action device is arranged at the side of and adjacent to the bars.

12. Device according to any one of the preceding claims, characterized in that the free-wheel-action device comprises at least one blocking member (95 ; 108 ; 162/164) on one of the frame parts and a blocking road (94 ; 168/170) on the other frame part.

13. Device according to claim 12, characterized in that blocking member and blocking road are in operative connection over the entire stroke of the movement of the frame parts.

14. Device according to claim 12 or 13, characterized in that one of the frame parts is in the form of a slider member (14), which can be withdrawn from the other frame part, taking the form of a housing (12), and pushed back into it again, characterized in that the blocking member is arranged on the slider member near to the inner, housing, end thereof.

15. Device according to any one of claims 12 to 14, to the extent that they refer back to claim 5, characterized in that there is displaceably joined to one of the frame parts (14) as a blocking member a control projection (162), which is guided in a channel (168, 170), serving as a blocking road, of the other frame part (12).

16. Device according to claim 15, characterized in that the channel has, at selected positions, reversing loops with stop members (72, 174, 176) which prevent a reversal of the direction of movement.

17. Device according to claim 15 or 16, characterized in that the control projection is pivotally connected to the frame part.

18. Device according to claim 17, characterized in that the control projection is pivotable about an axis extending at right angles to the direction of movement of the frame parts and is displaceable through the path of the channel transversely to the direction of movement of the frame parts.

19. Device according to claim 15 or 16, characterized in that the control projection is in the form of a single-arm lever with an extension (164) close to its free end, which extension is guided in the channel.

20. Device according to any one of claims 17 to 19, characterized in that a pivotal bearing for the control projection is integrally formed on one of the frame parts.

21. Device according to claim 18, characterized in that the lever extends from its bearing opposite to the direction of withdrawal of the frame part, to which it is pivotally connected.

22. Device according to any one of claims 15 to 21, characterized in that the channel comprises portions extending parallel to the direction of movement of the frame parts.

23. Device according to claim 22, characterized in that the channel contains deflection coulisse-type elements (166) for the control projection.

24. Device according to claims 16 and 23, characterized in that the stop members are integrally formed on the coulisse-type elements.

25. Device according to any one of claims 15 to 24, characterized in that the channel is integrally formed on the other frame part.

26. Device according to any one of claims 15 to 25, characterized in that the control projection is displaceable against a frictional braking force.

27. Device according to claim 6, characterized in that the free-wheel-action device comprises a toothed rack (94) on one frame part (12), which toothed rack meshes with a pinion (95) mounted on the other frame part (14), which pinion (95) is displaceably mounted in a slot (97) in the direction of movement of the frame parts (12, 14), in that the pinion, on movement of the frame parts in the admissible direction, is displaced through the action of friction to one end of the slot, and on movement in an inadmissible direction, is displaced to the other end of the slot where it comes into locking engagement with a locking lug (100, 101), and in that a respective stop (104) for the reversal in direction of rotation of the pinion is provided in each end position of the two frame parts.

28. Device according to claim 27, characterized in that the pinion (95) is biassed, in the direction of the slot (97), by means of a spring (98) acting against a wall of one frame part (12).

29. Device according to claim 28, characterized in that the spring (98) is integrally formed with the pinion (95) in the form of a curved leaf spring extending over the diameter of the pinion.

30. Device according to claim 6, characterized in that there is arranged in one of the walls of one of the frame parts a jamming-action element (108, 110) which has two possible directions of action as regards an opposing wall of the other frame part and of which the direction of action can be reversed in the end positions of the frame parts.

31. Device according to claim 30, characterized in that the jamming-action element is designed as an eccentric roller (108) which is held by bias in blocking position.

32. Device according to claim 31, characterized in that the eccentric roller (108) has a pin (110) opposite its greatest radius, which pin is in engagement with a spring (112), and there are provided in the end positions of the frame parts recesses (114) into which the roller (108) can withdraw.

**Revendications**

1. Dispositif de reclassement cyclique d'une pile de feuilles rectangulaires ou carrées, comportant un premier élément en forme de cadre (12) et un second élément en forme de cadre (14), qui sont déplaçables en va-et-vient l'un par rapport à l'autre, parallèlement au plan principal de la pile d'images enfermée par les deux éléments en forme de cadres, caractérisé en ce que les deux éléments en forme de cadres sont accouplés par l'intermédiaire d'un dispositif à roue libre (94-104 ; 106-14 ; 160-174), qui, au moins sur des zones partielles du déplacement des éléments en forme de cadres, bloque les éléments en forme de cadre lors de l'inversion du sens de déplacement.

2. Dispositif selon la revendication 1, dans lequel les éléments en forme de cadres sont mobiles entre une position d'extrémité intérieure, à l'état emboîté, et une position d'extrémité extérieure à l'état ressorti, ces positions étant fixées par des butées, caractérisé en ce que le dispositif à roue libre comporte des moyens (96-99, 104 ; 114), qui, dans les positions d'extrémité, libèrent l'inversion de la direction de déplacement.

3. Dispositif selon la revendication 1 ou 2, caractérisé en ce que le dispositif à roue libre empêche l'inversion de la direction de déplacement dans les deux zones d'inversion, avant que soient atteintes les positions d'extrémité.

4. Dispositif selon l'une des revendications 1-3, caractérisé en ce que dans l'un des éléments en forme de cadres (14) se trouve prévue une barrette formant séparateur (20), qui limite une fente de séparation pour une image et une fente de renvoi pour cette image, et en ce que le dispositif à roue libre est bloqué au moins au niveau de la course d'extraction lors du changement de direction, lors duquel le bord arrière, dans la direction d'extraction, de cette image traverse complètement le passage de séparation.

5. Dispositif selon l'une des revendications 1-4, caractérisé en ce que dans l'un des éléments en forme de cadres (14) se trouve prévue une barrette formant séparateur (20), qui limite une fente de séparation pour une image et une fente de renvoi pour cette image, et en ce que le dispositif à roue libre est bloqué au moins au niveau de la course d'extraction lors du changement de direction, lors duquel le bord arrière, dans la direction d'extraction, de cette image traverse complètement le passage de séparation.

6. Dispositif selon l'une des revendications précédentes, caractérisé en ce que le dispositif à roue libre empêche tout changement de la direction de déplacement des éléments en forme de cadres entre une position d'extrémité intérieure et une position d'extrémité extérieure et inversement.

7. Dispositif selon l'une des revendications 1-5, caractérisé en ce que, uniquement dans les zones sélectionnées des positions relatives des éléments en forme de cadres, le dispositif à roue libre empêche un changement de la direction de déplacement, tandis qu'il l'autorise dans les autres zones.

8. Dispositif selon l'une des revendications précédentes, caractérisé par deux dispositifs à roue libre symétriques, travaillant de façon synchrone, des deux côtés d'un plan médian s'étendant dans la direction de déplacement des éléments en forme de cadres.

9. Dispositif selon l'une des revendications précédentes, caractérisé en ce que le dispositif à roue libre est disposé dans une zone située entre deux parois voisines des deux éléments en forme de cadres.

10. Dispositif selon la revendication 9, caractérisé en ce que l'un des éléments en forme de cadres (14) est réalisé sous la forme d'un tiroir comportant des longerons (44), qui sont parallèles à la direction de déplacement et entre lesquels est située la pile d'images, et en ce que le dispositif à roue libre est disposé à l'extérieur de la zone limitée par les longerons.

11. Dispositif selon la revendication 10, caractérisé en ce que le dispositif à roue libre est disposé latéralement à côté des longerons.

12. Dispositif selon l'une des revendications précédentes, caractérisé en ce que le dispositif à roue libre comporte au moins un organe de blocage (95 ; 108 ; 162/164), situé sur l'un des éléments en forme de cadres et une piste de blocage (94 ; 168/170) située sur l'autre élément en forme de cadre.

13. Dispositif selon la revendication 12, caractérisé en ce que l'organe de blocage et la piste de blocage sont reliés, selon une liaison active, sur l'ensemble de la course de déplacement des éléments en forme de cadres.

14. Dispositif selon la revendication 12 ou 13, caractérisé en ce que l'un des éléments en forme de cadres est réalisé sous la forme d'un tiroir (14), qui peut être ressorti hors de l'autre élément en forme de cadre réalisé sous la forme d'un boîtier (12), et peut être réinséré dans cet élément en forme de cadre, caractérisé en ce que l'organe de blocage est disposé sur le tiroir à proximité de son extrémité située à l'intérieur du boîtier.

15. Dispositif selon l'une des revendications 12-14, dans la mesure où elles sont rattachées aux revendications 1-5, caractérisé en ce qu'à l'un des éléments en forme de cadres (14) est reliée, de manière à être déplaçable, une came de commande (162) formant organe de blocage, qui est guidée dans un canal (168, 170) utilisé comme piste de blocage, de l'autre élément en forme de cadre (12).

16. Dispositif selon la revendication 15, caractérisé en ce que le canal comporte, en des emplacements sélectionnés, les boucles de renvoi munies de butées (172, 174, 176), qui empêchent une inversion de la direction du sens de déplacement.

17. Dispositif selon la revendication 15 ou 16, caractérisé en ce que la came de commande est reliée d'une manière articulée à l'élément en forme de cadre.

18. Dispositif selon la revendication 17, caractérisé en ce que la came de commande peut pivoter autour d'un axe perpendiculaire à la direction de déplacement des éléments en forme de cadres et peut être décalée par suite de la configuration du canal transversalement par rapport à la direction de déplacement des éléments en forme de cadres.

19. Dispositif selon la revendication 15 ou 16, caractérisé en ce que la came de commande est réalisée sous la forme d'un levier à un bras comportant, à proximité de son extrémité libre, un prolongement (164) guidé dans le canal.

20. Dispositif selon l'une des revendications 17-19, caractérisé en ce qu'un palier pivotant pour la came de commande est formé par façonnage, d'un seul tenant, sur l'un des éléments en forme de cadres.

21. Dispositif selon la revendication 18, caractérisé en ce que le levier s'étend depuis un support en sens opposé de la direction d'extraction de l'élément en forme de tiroir, sur lequel il est articulé.

22. Dispositif selon l'une des revendications 15-21, caractérisé en ce que le canal comporte des sections parallèles à la direction de déplacement des éléments en forme de cadres.

23. Dispositif selon la revendication 22, caractérisé en ce que le canal contient des coulisses de déviation (166) pour la came de commande.

24. Dispositif selon les revendications 16 et 23, caractérisé en ce que les butées sont formées par façonnage sur les coulisses.

25. Dispositif selon l'une des revendications 15 à 24, caractérisé en ce que le canal est formé par façonnage sur l'autre élément en forme de cadre.

26. Dispositif selon l'une des revendications 15-25, caractérisé en ce que la came de commande est déplaçable en étant freinée par frottement.

27. Dispositif selon la revendication 6, caractérisé en ce que le dispositif à roue libre comprend une crémaillère (94), qui est située sur un élément en forme de cadre (12) et engrène avec un pignon (95), qui est monté sur l'autre élément en forme de cadre (14) et est monté de manière à être déplaçable dans un trou allongé (94) dans la direction de déplacement des éléments en forme de cadres (12, 14), en ce que lors du déplacement des éléments en forme de cadres, le pignon est déplacé par frottement, dans une direction autorisée, pour venir contre une extrémité du trou allongé, tandis que lors du déplacement dans la direction non autorisée, il est amené contre l'autre extrémité du trou allongé et y engrène avec un ergot de blocage (100, 101) en établissant une liaison de blocage, et en ce qu'une butée respective (104) servant à inverser le sens de rotation du pignon est prévue dans les positions d'extrémité des deux éléments en forme de cadres.

28. Dispositif selon la revendication 27, caractérisé en ce que le pignon (95) est précontraint au moyen d'un ressort (98) dans la direction du trou allongé (97), le ressort prenant appui contre une paroi de l'un des éléments en forme de cadres (12).

29. Dispositif selon la revendication 28, caractérisé en ce que le ressort (98) est réalisé d'un seul tenant avec le pignon (95) sous la forme d'un ressort en forme de lame cintrée, qui s'étend sur le diamètre du pignon.

30. Dispositif selon la revendication 6, caractérisé en ce que dans l'une des parois de l'un des éléments en forme de cadres se trouve disposé un élément en forme de coin de freinage (108 110) qui possède deux directions d'action possibles par rapport à une paroi opposée de l'autre élément en forme de cadre et dont la direction d'action peut être inversée dans les positions d'extrémité des éléments en forme de cadres.

31. Dispositif selon la revendication 30, caractérisé en ce que l'élément en forme de coin de freinage est réalisé sous la forme d'un galet excentrique (108), qui est maintenu à l'état précontraint dans la position de blocage.

32. Dispositif selon la revendication 31, caractérisé en ce que le galet excentrique (108) possède, à l'opposé de la partie en débordement maximal, un téton (110) qui est en prise avec un ressort (112) et en ce que, lorsque les éléments en forme de cadres sont dans les positions d'extrémité, il est prévu des évidements (114), dans lesquels le galet peut s'écarter élastiquement.

FIG. 6

FIG. 1

## FIG. 2

50 44 55 20 64 12 58 88
61 14 92 75 91 89 86 86 90 86 89 62 87
60 67 85 63 73

## FIG.3

48 56 38 84 82 44 55 59 66 35 20 77 40 64 12 58 88
61 14 46 92 81 83 26 28 32 74 52 72 68 62 104
60 63 67

EP 0 201 552 B1

FIG. 4

FIG. 5

FIG. 7

FIG. 8

FIG. 9

FIG.10

EP 0 201 552 B1

## FIG. 11

## FIG. 12

FIG.13

FIG.14

EP 0 201 552 B1